# EUROPÄISCHE PATENTSCHRIFT

(11) **EP 3 581 794 B1**
(45) Veröffentlichungstag und Bekanntmachung des Hinweises auf die Patenterteilung: **13.01.2021**
(21) Anmeldenummer: 19179590.5
(22) Anmeldetag: 12.06.2019
(51) Int. Cl.: F03D 13/10, F03D 13/40

(54) **MONTAGESYSTEM UND MONTAGEVERFAHREN FÜR EINEN ROTORSTERN EINER WINDENERGIEANLAGE**
MOUNTING SYSTEM AND METHOD FOR MOUNTING A ROTOR STAR OF A WIND TURBINE
SYSTÈME DE MONTAGE ET PROCÉDÉ DE MONTAGE D'UN ROTOR EN ÉTOILE POUR UNE ÉOLIENNE

(30) Priorität: 12.06.2018 DE 102018004646
(43) Veröffentlichungstag der Anmeldung: 18.12.2019
(73) Patentinhaber: SENVION GmbH, 22297 Hamburg (DE)
(72) Erfinder: Lorbach, Severin, 24239 Achterwehr (DE); Göttsche, Christian, 24802 Groß Vollstedt (DE)
(74) Vertreter: Glawe, Delfs, Moll

(56) Entgegenhaltungen:
- EP-A1- 2 778 389
- EP-A1- 3 252 304
- US-A1- 2013 236 304

## Beschreibung

Die Erfindung betrifft ein Montagegestell und ein Montageverfahren für einen Rotorstern einer Windenergieanlage.

Bei einer Windenergieanlage ist üblicherweise am oberen Ende eines Turms eine Gondel angeordnet, die einen Rotor der Windenergieanlage trägt. Beim Errichten einer solchen Windenergieanlage wird zunächst die Gondel auf dem Turm der Windenergieanlage angebracht und anschließend der Rotor mit der Gondel verbunden. Eine Möglichkeit für die Rotormontage ist es, die Rotorblätter am Boden mit der Rotornabe zu einem Rotorstern zu verbinden und dann den Rotorstern in seiner Gesamtheit an der Gondel zu befestigen.

Für die Montage des Rotorsterns am Boden kann ein Montagegestell verwendet werden, das die Rotornabe trägt, so dass die Rotorblätter an die Rotornabe angeschlossen werden können. Der Rotorstern einer Windenergieanlage ist üblicherweise so gestaltet, dass der Rotorstern bezogen auf eine Achse der Rotornabe im Gleichgewicht ist, wenn alle Rotorblätter an der Rotornabe angeschlossen sind. Dieses Gleichgewicht ist gestört, wenn im teilmontierten Zustand des Rotorsterns erst ein Teil der Rotorblätter mit der Rotornabe verbunden ist.

Auch im teilmontierten Zustand des Rotorsterns sollte das Montagegestell stabil stehen. Erreicht werden kann dies beispielsweise, indem die einzelnen Rotorblätter in einem äußeren Abschnitt abgestützt werden, was allerdings einigen Aufwand bedeutet.

Verfahren und Systeme zur Montage von Rotorsternen sind beispielsweise in EP 3 252 304 A1, WO 2009/100377 A1, KR 101614497 B1 und US 2013/236304 A1 beschrieben. Der Erfindung liegt die Aufgabe zugrunde, ein Montagegestell und ein Montageverfahren vorzustellen, so dass das Montagegestell einfach verwendet und transportiert werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Das erfindungsgemäße Montagegestell umfasst einen Transportbehälter, einen Stützarm und einen Nabenadapter. In einem Transportzustand des Montagegestells ist der Stützarm innerhalb des Transportbehälters angeordnet. In einem Nutzzustand des Montagegestells ist der Stützarm mit dem Transportbehälter verbunden, so dass der Stützarm und der Transportbehälter jeweils einen Ausleger des Montagegestells bilden.

Indem der Stützarm im Transportzustand innerhalb des Transportbehälters angeordnet ist, entsteht eine kompakte Einheit, die leicht transportiert werden kann. Indem der Transportbehälter und der Stützarm im Nutzzustand als Ausleger verwendet werden, wird ein Montagegestell gebildet, das so stabil steht, dass es auch einen teilmontierten Rotorstern halten kann.

Der Nabenadapter kann eine für die Rotornabe bestimmte Anschlusseinrichtung aufweisen. Wenn die Rotornabe mit der Anschlusseinrichtung verbunden ist, wird die Rotornabe in einer festen Position relativ zu dem Nabenadapter gehalten. Die Verbindung kann so ausgelegt sein, dass der Nabenadapter auch im teilmontierten Zustand des Rotorsterns stabil gehalten wird. Die Anschlusseinrichtung kann einen Anschlusskranz aufweisen, auf dem ein Anschlussflansch der Rotornabe aufliegen kann. Der Anschlusskranz kann sich im Nutzzustand in einer horizontalen Ebene erstrecken, so dass eine zentrale Achse des Nabenadapters senkrecht ausgerichtet ist. Der Anschlusskranz kann mit einem zu dem Anschlussflansch der Rotornabe passenden Lochkreis ausgestattet sein, so dass die Rotornabe mit dem Nabenadapter verschraubt werden kann. In einer Ausführungsform umfasst der Anschlusskranz eine Mehrzahl von Lochkreisen mit unterschiedlichen Durchmessern, so dass unterschiedliche Typen von Rotornaben an den Nabenadapter angeschlossen werden können. Der Anschlusskranz kann mit einem oder mehreren Zentrierstiften ausgestattet sein, die in Bohrungen der Rotornabe eingreifen, um eine richtige Position der Rotornabe relativ zu dem Nabenadapter zu definieren.

Der Nabenadapter kann zusätzlich dazu so gestaltet sein, dass eine Gondel der Windenergieanlage auf dem Nabenadapter abgelegt werden kann. Wenn die Gondel auf dem Nabenadapter abgelegt ist, können Abdeckungen entfernt werden und ähnliche Vorarbeiten geleistet werden, ohne dass Arbeiten unter einer schwebenden Last erforderlich sind.

Der Nabenadapter kann im Nutzzustand auf dem Dach des Transportbehälters angeordnet sein. Die Verbindung kann lösbar sein, beispielsweise in dem der Nabenadapter mit dem Transportbehälter verschraubt ist. Im Transportzustand des Montagegestells kann der Nabenadapter im Inneren des Transportbehälters angeordnet sein. Im Transportzustand kann die zentrale Achse des Nabenadapters eine andere Ausrichtung haben als im Nutzzustand. Insbesondere kann die zentrale Achse des Nabenadapters im Transportzustand einen Winkel von wenigstens 45°, vorzugsweise von wenigstens 60° mit der Vertikalen einschließen.

Der Transportbehälter kann eine horizontale Achse aufweisen, die sich von der im Nutzzustand vertikalen zentralen Achse des Nabenadapters bis zu einem distalen Ende des Transportbehälters erstreckt. Der Stützarm kann eine Längsachse aufweisen, die sich von der im Nutzzustand vertikalen zentralen Achse des Nabenadapters bis zu einem distalen Ende des Transportbehälters erstreckt. Die Längsachse des Stützarms kann im Nutzzustand des Montagegestells einen größeren Winkel mit der horizontalen Achse des Transportbehälters einschließen als im Transportzustand. Beispielsweise kann der Winkel zwischen der Längsachse des Stützarms und der horizontalen Achse des Transportbehälters im Transportzustand kleiner sein als 20°, vorzugsweise kleiner sein als 10°, weiter vorzugsweise kleiner sein als 5°.

Im Nutzzustand kann der Stützarm so mit dem Transportbehälter verbunden sein, dass der Nabenadapter einen Schnittpunkt zwischen der Längsachse des Transportbehälters und der horizontalen Achse des Stützarms überdeckt. Mit anderen Worten liegt der Schnittpunkt innerhalb der vom Nabenadapter abgedeckten Fläche, wenn der Nabenadapter in eine Ebene mit den beiden Achsen projiziert wird. In einer Ausführungsform schneidet die zentrale Achse des Nabenadapters den Schnittpunkt der beiden Längsachsen.

Der Nabenadapter kann im Nutzzustand des Montagegestells nahe einem Ende des Transportbehälters und/oder nahe einem Ende des Stützarms angeordnet sein. Mit anderen Worten kann der Abstand zwischen der zentralen Achse des Nabenadapters und einem distalen Ende des Transportbehälters mindestens 70 %, vorzugsweise mindestens 80 %, weiter vorzugsweise mindestens 90 % der Länge des Transportbehälters entsprechen. Entsprechendes kann für den Stützarm gelten. Ein Element, das im Nutzzustand in einer starren Verbindung zu dem Nabenadapter steht und dessen distales Ende einen großen radialen Abstand zu der zentralen Achse des Nabenadapters hat, wird als Ausleger des Montagegestells bezeichnet.

Der Stützarm kann im Nutzzustand des Montagegestells eine größere Länge haben als im Transportzustand. Beispielweise kann der Stützarm ein erstes Segment und ein zweites Segment umfassen, die im Nutzzustand die Länge des Stützarms aufspannen und die für den Transportzustand in eine kompakte Anordnung gebracht werden. Beispielsweise kann der Stützarm einen Teleskop-Mechanismus aufweisen, so dass die beiden Segmente eingefahren bzw. ausgefahren werden können. Im Nutzzustand kann die Länge des Stützarms größer sein als die Länge des Transportbehälters. Im Transportzustand kann die Länge des Stützarms kleiner sein als die Länge des Transportbehälters. Die Länge des Transportbehälters erstreckt sich parallel zu der horizontalen Achse des Transportbehälters. Die Länge des Stützarms erstreckt sich parallel zu der Längsachse des Stützarms.

An einem distalen Ende des Stützarms kann ein höhenverstellbarer Fuß angeordnet sein, so dass das Montagegestell im Nutzzustand auch auf unebenem Grund sicher abgestützt werden kann. Zur weiteren Erhöhung der Standfestigkeit können der Transportbehälter und/oder der Stützarm mit Auflagefläche versehen sein, auf denen zusätzlicher Ballast abgelegt werden kann.

Die horizontale Achse des Transportbehälters kann mit der Längsachse des Stützarms einen Winkel zwischen 100° und 140°, vorzugsweise zwischen 110° und 130° einschließen. Dies bietet sich an, wenn das Montagegestell für einen Rotorstern mit drei Rotorblättern verwendet wird. Die Rotornabe kann dann so mit dem Nabenadapter verbunden werden, dass ein erstes Rotorblatt des Rotorsterns sich parallel zu der horizontalen Achse des Transportbehälters erstreckt und dass ein zweites Rotorblatt des Rotorsterns sich parallel zu der Längsachse des Stützarms erstreckt.

Bei der Montage des Rotorsterns kann dann so vorgegangen werden, dass das erste mit der Rotornabe verbundene Rotorblatt sich parallel zu entweder der horizontalen Achse des Transportbehälters oder zu der Längsachse des Stützarms erstreckt. Das zweite mit der Rotornabe verbundene Rotorblatt kann sich parallel zu der anderen der beiden Achsen erstrecken. Mit der Montage des dritten Rotorblatts wird das Ungleichgewicht beseitigt, so dass keine langen Ausleger mehr erforderlich sind, damit das Montagegestell stabil steht.

Der Transportbehälter kann eine Tragestruktur für die von dem Nabenadapter und dem Rotorstern ausgeübten Lasten aufweisen. Die Tragestruktur kann sich in vertikaler Richtung zwischen einem Boden und einer Decke des Transportbehälters erstrecken. Die Tragestruktur kann eine zylinderförmige Wand umfassen, an deren oberem Ende der Nabenadapter befestigt werden kann. Die Tragestruktur kann einen in seitlicher Richtung weisenden Stützarm-Anschluss aufweisen. Der Stützarm-Anschluss kann beispielsweise als Manschette gestaltet sein, die dazu ausgelegt ist, ein proximales Ende des Stützarms aufzunehmen. Der Stützarm kann mit Bolzen in dem Stützarm-Anschluss gesichert sein.

Die Tragestruktur kann einen ersten Stützarm-Anschluss und einen zweiten Stützarm-Anschluss umfassen, an die der Stützarm wahlweise angeschlossen werden kann. Zwischen den Stützarm-Richtungen, die durch die zwei Stützarm-Anschlüsse definiert werden, kann ein Winkel von 100° bis 140°, vorzugsweise von 110° bis 130° eingeschlossen sein. Wenn der Stützarm bezogen auf die horizontale Achse des Transportbehälters entweder nach schräg links oder nach schräg rechts weisen kann, kann das Montagegestell flexibel verwendet werden.

Das Montagegestell kann so gestaltet sein, dass im Nutzzustand ein Zugang zu der auf dem Montagegestell befestigten Rotornabe möglich wird. Es kann einen Zugangsweg geben, der sich von dem Innenraum des Transportbehälters durch das Dach des Transportbehälters hindurch erstreckt. In dem Dach des Transportbehälters kann ein Dachausstieg vorgesehen sein, wobei der Dachausstieg verschließbar sein kann, so dass der Innenraum des Transportbehälters vor Witterungseinflüssen geschützt werden kann. Der Transportbehälter kann so gestaltet sein, dass der Innenraum im Transportzustand insgesamt vor Witterungseinflüssen geschützt ist.

Der Zugangsweg kann sich im Inneren des Nabenadapters erstrecken. Vom Innenraum des Nabenadapters aus ist der Zugang zu der Rotornabe möglich, beispielsweise um die Rotorblätter mit den Blattadaptern der Rotornabe verbinden zu können. Ein von dem Dach des Transportbehälters ausgehender Zugangsweg kann sich durch die Seitenwand des Nabenadapters hindurch erstrecken. In der Seitenwand des Nabenadapters kann zu diesem Zweck ein Durchgang ausgebildet sein, beispielsweise in Form eines Mannlochs oder einer Tür.

Möglich ist auch ein Zugangsweg, der sich durch den Innenraum der Tragestruktur erstreckt. Das Innere der Tragestruktur kann durch das Dach des Transportbehälters hindurch mit dem Inneren des Nabenadapters verbunden sein. Um den Zugang zum Innenraum der Tragestruktur zu ermöglichen, kann in der Seitenwand der Tragestruktur ein Durchgang ausgebildet sein.

Ein Teil der an dem Rotorstern auszuführenden Arbeiten kann von einer Person erledigt werden, die auf dem Dach des Transportbehälters steht. Das Montagegestell kann eine Arbeitsplattform aufweisen, die im Nutzzustand über die Kontur des Transportbehälters hinausragt, insbesondere in seitlicher Richtung, und die im Transportzustand nicht über das Dach des Transportbehälters hinausragt. Die Arbeitsplattform kann in Längsrichtung und/oder in Querrichtung über den Transportbehälter hinausragen. Für den Wechsel zwischen dem Nutzzustand und dem Transportzustand der Arbeitsplattform kann beispielsweise ein Schiebemechanismus oder ein Schwenkmechanismus vorgesehen sein. Möglich ist auch, eine lösbar mit dem Transportbehälter verbundene Arbeitsplattform, die im Transportzustand in dem Transportbehälter angeordnet ist. Im Nutzzustand kann die Arbeitsplattform von unten abgestützt sein, beispielsweise indem die Arbeitsplattform sich auf einer nach außen geöffneten Tür des Transportbehälters abstützt. Die Arbeitsplattform erfüllt vorzugsweise die jeweils einschlägigen HSE-Anforderungen(Health, Safety and Environment-Anforderungen; auf Deutsch: Gesundheits-, Sicherheit- und Umwelt-Anforderungen). Dazu kann die Arbeitsplattform bspw. mit einem umlaufenden Geländer und/oder einer rutschfesten Oberfläche versehen sein.

Der Transportbehälter kann mit einem Schubboden ausgestattet sein, der aus dem Innenraum des Transportbehälters ausgezogen werden kann, um das Beladen und Entladen des Transportbehälters zu erleichtern. Der Schuhboden kann einen zu der Tragestruktur benachbarten Teil des Transportbehälters einnehmen. Der Schuhboden kann sich über wenigstens 50 %, vorzugsweise wenigstens 70 % der Länge des Transportbehälters erstrecken. Der Schubboden kann beispielsweise auf Schienen oder auf Rollen gegenüber dem Boden des Transportbehälters geführt sein. Die Bewegungsrichtung des Schuhbodens kann parallel zu der Längsachse des Transportbehälters sein. Im Transportzustand können der Stützarm und/oder der Nabenadapter auf dem Schuhboden angeordnet sein.

Für eine gleichmäßige Gewichtsverteilung im Transportzustand ist es von Vorteil, wenn der Nabenadapter an einem zu der Tragestruktur gegenüberliegenden Ende des Transportbehälters angeordnet ist. Beispielsweise kann der Abstand zwischen dem Nabenadapter und der Tragestruktur im Transportzustand mindestens 50 % der Länge des Transportbehälters entsprechen.

Um das Bewegen der Komponenten des Montagegestells zwischen dem Nutzzustand und dem Transportzustand zu erleichtern, können die Komponenten des Transportsystems mit Transporthilfsmitteln ausgestattet sein. Zu den Transporthilfsmitteln können Ösen gehören, an denen mit einem Kran angegriffen werden kann. Zusätzlich oder alternativ dazu können die Komponenten des Montagegestells mit Gabelstapleraufnahmen ausgestattet sein.

Wenn der Transportbehälter mit solchen Transporthilfsmitteln ausgestattet ist, können diese so angeordnet sein, dass der Transportbehälter im Gleichgewicht ist, wenn der Stützarm und der Nabenadapter nicht in dem Transportbehälter angeordnet sind. Zusätzlich oder alternativ dazu können Transporthilfsmittel vorgesehen sein, mit denen der Transportbehälter im Transportzustand im Gleichgewicht ist. Die Transport-Hilfsmittel können so gestaltet sein, dass sie im Nutzzustand über die Kontur des Transportbehälters hinausragen und im Transportzustand nicht über die Kontur des Transportbehälters hinausragen. Beispielsweise können die Transporthilfsmittel lösbar mit dem Dach des Transportbehälters verbunden sein.

Der Stützarm kann Transporthilfsmittel aufweisen, mit denen die Stützarm-Segmente einzeln oder gemeinsam angehoben werden können.

Der Transportbehälter kann in seinen Abmessungen einem 40-Fuß-ISO-Container entsprechen. Der Transportbehälter kann mit Containerecken ausgestattet sein, die einem solchen ISO-Container entsprechen. Dadurch wird es möglich, den Transportbehälter beim Verladen auf ein Schiff oder beim Transport mit einem Lkw mit den für Container üblichen Hebemitteln anzuheben und zu sichern.

Die Erfindung betrifft außerdem ein Verfahren zum Montieren eines Rotorsterns, bei dem ein Stützarm aus dem Innenraum eines Transportbehälters entnommen wird und bei dem der Stützarm so mit dem Transportbehälter verbunden wird, dass der Stützarm und der Transportbehälter Ausleger eines Montagegestells bilden. Eine Rotornabe wird an einen Nabenadapter des Montagegestells angeschlossen. Ein Rotorblatt wird mit der Rotornabe verbunden.

Das Verfahren kann mit weiteren Merkmalen fortgebildet werden, die im Zusammenhang des erfindungsgemäßen Montagegestells beschrieben sind. Das Montagegestell kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:

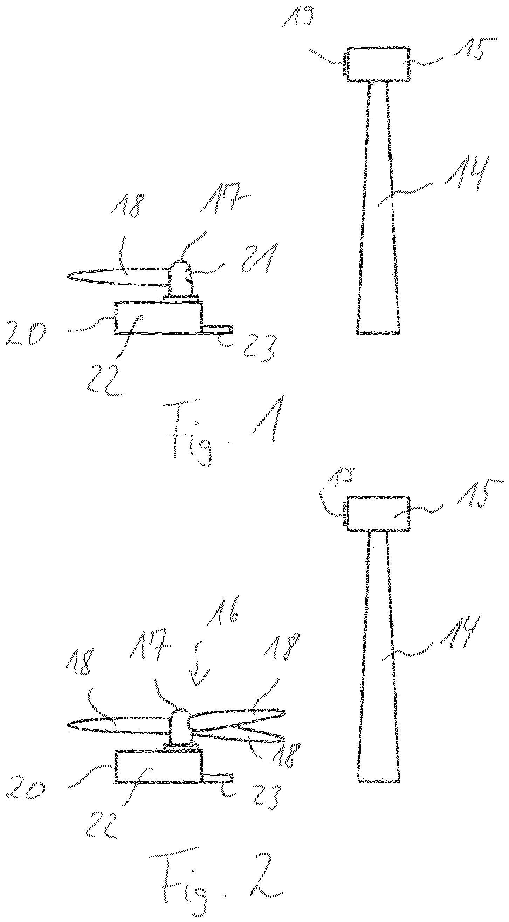

- Fig. 1:: einen ersten Zwischenzustand beim Errichten einer Windenergieanlage;
- Fig. 2:: einen zweiten Zwischenzustand beim Errichten einer Windenergieanlage;
- Fig. 3 bis 6: verschiedene Ansichten eines erfindungsgemäßen Montagegestells im Nutzzustand;
- Fig. 7:: das Montagegestell aus Fig. 3 bis 7 in einem anderen Zustand;
- Fig. 8:: einen Ausschnitt aus einer alternativen Ausführungsform eines erfindungsgemäßen Montagegestells;
- Fig. 9:: eine schematische Darstellung eines erfindungsgemäßen Montagegestells;
- Fig. 10:: Elemente eines erfindungsgemäßen Montagegestells.

Beim Errichten einer Windenergieanlage kann so vorgegangen werden, dass zunächst ein Turm 14 aufgestellt wird und dann eine Gondel 15 mit dem oberen Ende des Turms 14 verbunden wird. In einem nachfolgenden Schritt kann ein Rotorstern 16, der eine Rotornabe 17 und drei Rotorblätter 18 umfasst, an eine drehbar in der Gondel gelagerte Rotorwelle 19 angeschlossen werden.

Die Rotornabe 17 und die Rotorblätter 18 werden separat voneinander zum Ort der Errichtung transportiert. Am Ort der Errichtung wird aus der Rotornabe 17 und den Rotorblättern 18 am Boden der Rotorstern 16 zusammengesetzt, bevor der Rotorstern 16 zur Gondel 15 angehoben wird.

Für die Montage des Rotorsterns wird in einem ersten Schritt die Rotornabe 17 auf einem Montagegestell 20 angeordnet. Anschließend werden nacheinander die drei Rotorblätter 18 an die Blattadapter 21 der Rotornabe 17 angeschlossen. Im teilmontierten Zustand, in dem nur ein oder zwei Rotorblätter 18 an die Rotornabe 17 angeschlossen sind, wirkt ein großes Kippmoment auf das Montagegestell 20. Das Montagegestell 20 muss so stabil stehen, dass es diese Kippkräfte aufnehmen kann.

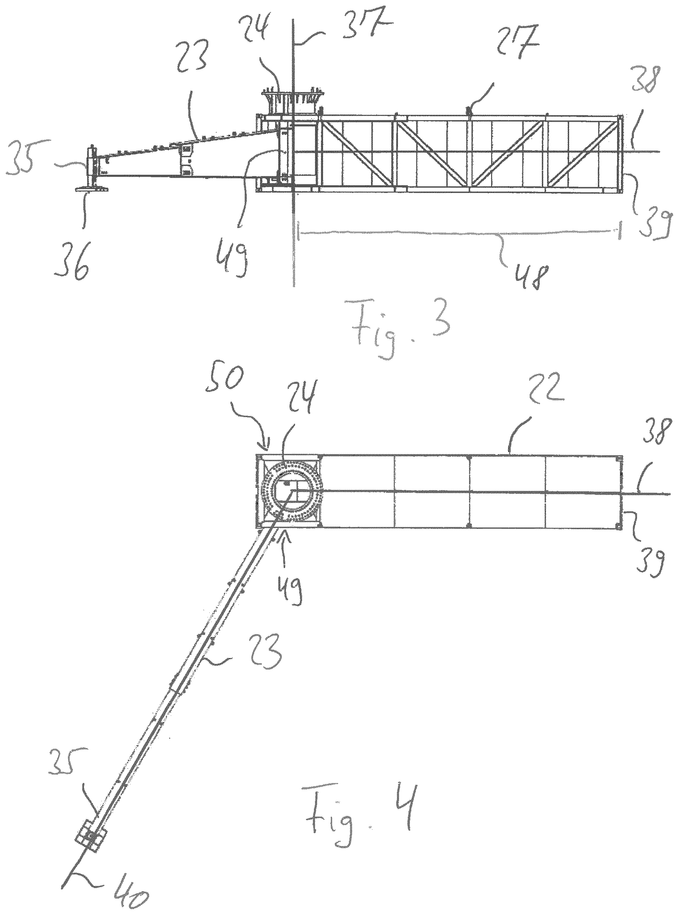

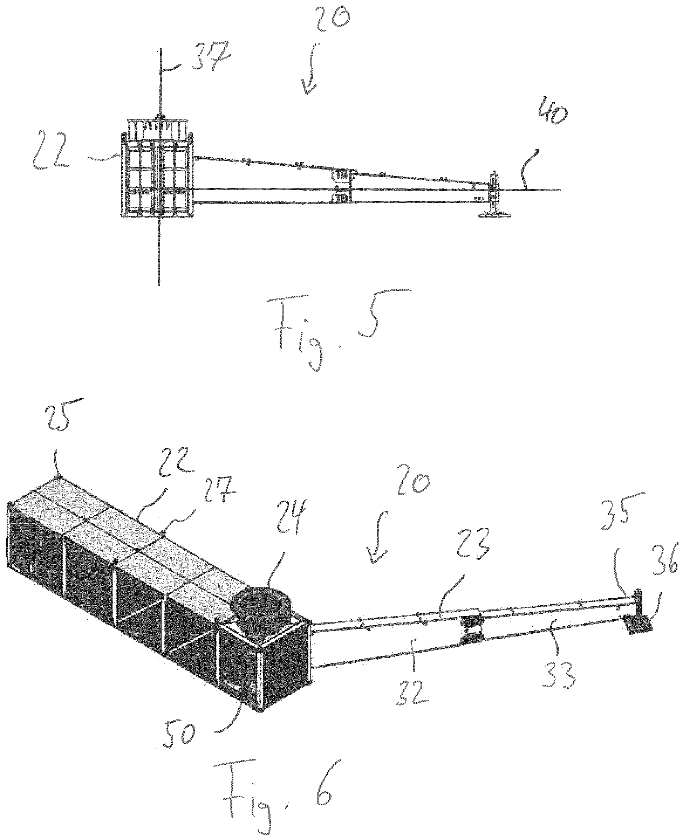

Gemäß den Fig. 3 bis 6 umfasst das Montagegestell 20 einen Transportbehälter 22 in Form eines standardmäßigen 40-Fuß-ISO-Containers. Mit dem Transportbehälter 22 verbunden ist ein Stützarm 23, der einen Ausleger des Montagegestells 20 bildet.

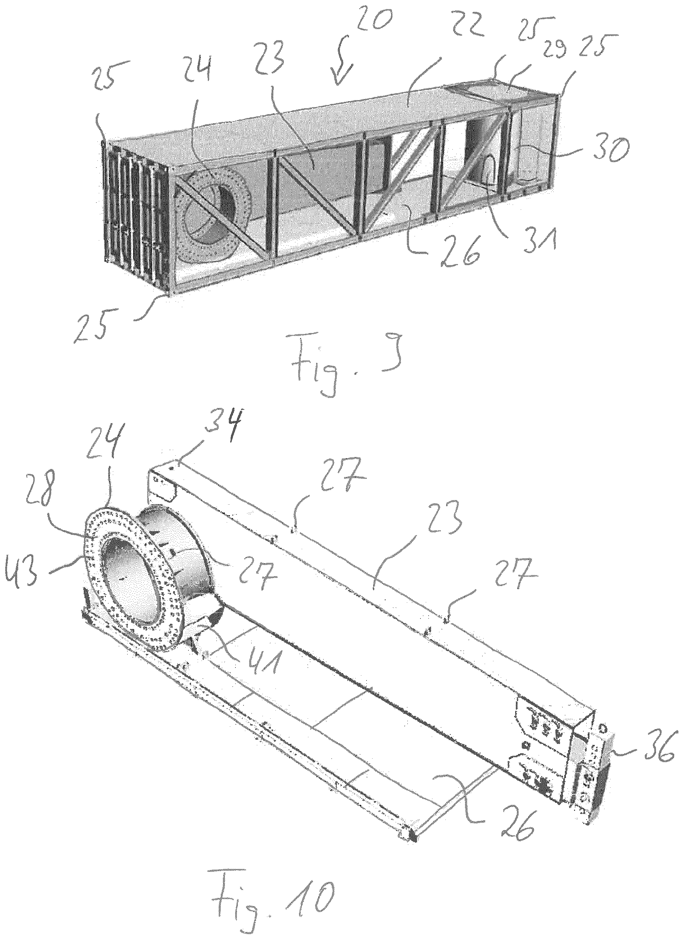

In Fig. 9 ist der Transportzustand gezeigt, in dem das Montagegestell 20 zum Ort der Errichtung transportiert wird. Der Stützarm 23 und ein Nabenadapter 24 sind im Innenraum des Transportbehälters 22 angeordnet. Es gibt keine Elemente, die über die äußere Kontur des Transportbehälters 22 hinausragen, so dass der Transportbehälter 22 im Transportzustand exakt den äußeren Abmessungen eines 40-Fuß-ISO Containers entspricht.

Der Transportbehälter 22 ist an allen acht Ecken mit standardmäßigen ISO-Containerecken 25 ausgestattet, so dass der Transportbehälter 22 wie ein üblicher Container auf der Straße oder auf See transportiert werden kann. Das Anheben und das Sichern des Transportbehälters 22 erfolgt mit den üblichen für solche Container vorgesehenen Mitteln.

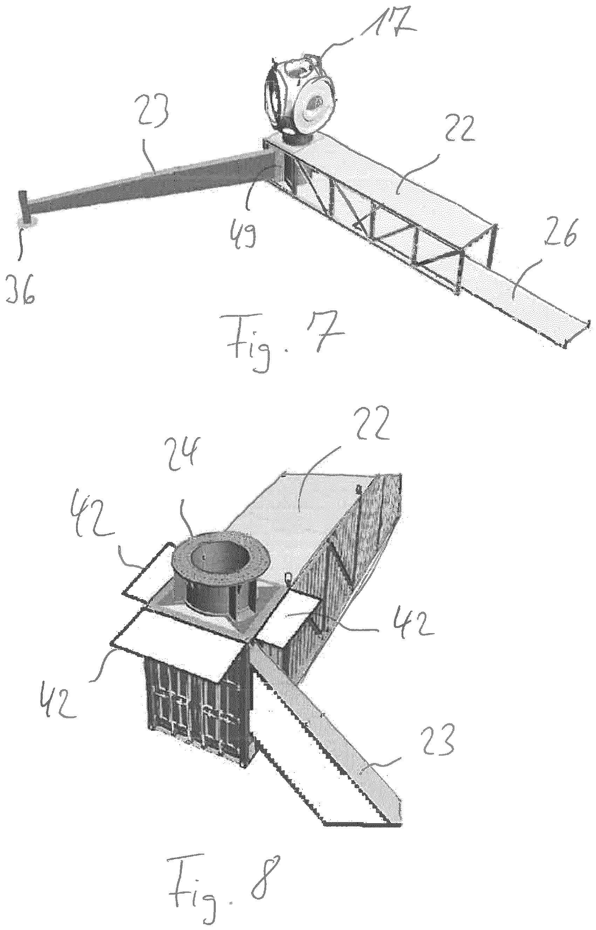

Der Stützarm 23 und der Nabenadapter 24 liegen auf einem Schubboden 26 auf, der über Schienen verschiebbar relativ zu dem Boden des Transportbehälters 22 gelagert ist. In Fig. 7 ist der Schubboden 26 im ausgezogenen Zustand dargestellt. Im ausgezogenen Zustand können der Stützarm 23 und der Nabenadapter 24 mit einem Kran leicht von dem Schubboden 26 abgehoben werden. Der Stützarm 23 und der Nabenadapter 24 sind zu diesem Zweck mit Transporthilfsmitteln in Form von Ösen 27 ausgestattet.

Um das Montagegestell 20 in den Nutzzustand zu bringen, wird der Nabenadapter 24 auf dem Dach des Transportbehälters 22 positioniert, so dass ein Anschlusskranz 28 nach oben weist. Es wird eine starre Verbindung zwischen dem Nabenadapter 24 und dem Transportbehälter 22 hergestellt, indem der Nabenadapter 24 mit einem Adapterflansch 29 des Transportbehälters 22 verbunden wird. Der Adapterflansch 29 bildet das obere Ende einer zylinderförmigen Tragestruktur 30, die sich bis zum Boden des Transportbehälters 22 erstreckt. Die Tragestruktur 30 ist so mit dem Transportbehälter 22 verbunden, dass auf den Nabenadapter 24 wirkende Kräfte in die Struktur des Transportbehälters 22 eingeleitet werden.

In der Seitenwand der Tragestruktur 30 sind zwei Anschlüsse 49, 50 für den Stützarm 23 ausgebildet. Der Stützarm 23 kann wahlweise mit einem der Stützarm-Anschlüsse 49, 50 verbunden werden, indem ein proximales Ende 34 des Stützarms 23 in den Stützarm-Anschluss 49, 50 eingeführt wird. Durch Bolzen kann der Stützarm 23 in dem Stützarm-Anschluss 49, 50 gesichert werden.

Der Stützarm 23 umfasst zwei Segmente 32, 33, die im Transportzustand teleskopartig ineinandergeschoben sind. Im Nutzzustand werden die Segmente 32, 33 auseinandergezogen, so dass der Stützarm 23 eine größere Länge hat als der Transportbehälter 22. An einem distalen Ende 35 des Stützarms 23 ist ein Stützfuß 36 angebracht, der in der Höhe verstellbar ist. Durch Verstellen des Stützfußes 36 kann das Montagegestell 20 auch auf unebenem Grund sicher abgestützt werden.

Der auf dem Transportbehälter 22 angeordnete Nabenadapter 24 hat eine zentrale Achse 37, die sich senkrecht nach unten erstreckt. Eine horizontale Achse 38 des Transportbehälters 22 erstreckt sich ausgehend von der zentralen Achse 37 bis zu einem distalen Ende 39 des Transportbehälters 22. Die mit dem Nabenadapter 24 verbundene Rotornabe 17 ist so ausgerichtet, dass ein erster Blattadapter 21 der Rotornabe 17 in Richtung der horizontalen Achse 38 des Transportbehälters 22 ausgerichtet ist. Ein mit dem ersten Blattadapter 21 verbundenes Rotorblatt 17 erstreckt sich parallel zu der horizontalen Achse 38 des Transportbehälters 22. Der Transportbehälter 22 bildet also einen Ausleger, der einem Umkippen des Montagegestells 20 unter der Last des teilmontierten Rotorsterns 16 entgegenwirkt.

Eine Längsachse 40 des Stützarms 23, die sich ausgehend von der zentralen Achse 37 des Nabenadapters 24 bis zu dem distalen Ende 35 des Stützarms 23 erstreckt, schließt mit der horizontalen Achse 38 des Transportbehälters 22 einen Winkel von 120° ein. Wenn ein erster Blattadapter der Rotornabe 17 zu der horizontalen Achse 38 ausgerichtet ist, so ist ein zweiter Blattadapter 21 in Richtung der Längsachse 40 des Stützarms 23 ausgerichtet. Ein mit dem zweiten Blattadapter 21 verbundenes Rotorblatt 18 erstreckt sich parallel zu der Längsachse 40 des Stützarms 23. Der Stützarm 23 bildet also ebenfalls einen Ausleger, der einem Umkippen des Montagegestells 20 unter der Last des teilmontierten Rotorsterns 16 entgegenwirkt. Zuletzt wird das dritte Rotorblatt 18 an den dritten Blattadapter 21 angeschlossen, so dass der Rotorstern 16 in einen Gleichgewichtszustand gebracht wird.

Um das Montagegestell 20 vom Transportzustand in den Nutzzustand zu bringen, wird zunächst der Transportbehälter 22 auf einer ebenen Fläche abgestellt, so dass die zentrale Achse 37 des Nabenadapters 24 senkrecht ausgerichtet ist. Um den Transportbehälter 22 mit einem Kran anheben zu können, ist der Transportbehälter mit Transporthilfsmitteln 27 in Form von einschraubbaren Ösen versehen. Die Ösen ragen über die Kontur des ISO-Containers hinaus und werden entfernt, wenn das Montagegestell 20 im Transportzustand ist.

Je nachdem, in welcher Reihenfolge die Rotorblätter 18 montiert werden sollen, wird der Stützarm 23 an einen der Stützarm-Anschlüsse 49, 50 angeschlossen, so dass der Stützarm 23 entweder nach schräg links oder nach schräg rechts weist. Der Stützfuß 36 wird nach unten ausgefahren, bis das Montagegestell 20 stabil abgestützt ist.

Im nächsten Schritt wird die Rotornabe 17 an den Nabenadapter 24 angeschlossen. Der Nabenadapter 24 ist mit einer Mehrzahl von nach oben weisenden Zentrierstiften ausgestattet. Wenn die Zentrierstifte in die Bohrungen der Rotornabe 17 eingreifen, ist die Rotornabe 17 richtig zu einem der Lochkreise 43 des Nabenadapters 24 ausgerichtet. Der Nabenadapter 24 hat eine Mehrzahl von Lochkreisen 43, so dass unterschiedliche Typen von Rotornaben mit dem Nabenadapter 24 verbunden werden können.

Die Arbeiten zum Verbinden des Nabenadapters 24 mit dem Transportbehälter 22 erfolgen vom Dach des Transportbehälters 22 aus. Der Aufstieg auf das Dach erfolgt innerhalb der Tragestruktur 30. In der Wand der Tragestruktur 30 ist ein Durchgang 31 ausgebildet, so dass der Innenraum der Tragestruktur 30 zugänglich ist. Einen weiteren Durchgang 41 gibt es in der Seitenwand des Nabenadapters 24, so dass sowohl innerhalb als auch außerhalb des Nabenadapters 24 gearbeitet werden kann. In einer Ausführungsform grenzt an das Dach des Transportbehälters 22 eine Arbeitsplattform 42 an, so dass eine größere Fläche zum Arbeiten zur Verfügung steht. Die Arbeitsplattform 42 kann auf einer geöffneten Tür des Transportbehälters 22 abgestützt sein. Im Transportzustand kann die Arbeitsplattform 42 im Innenraum des Transportbehälters (22) angeordnet sein.

## Patentansprüche

1. Montagegestell für einen Rotorstern (16) einer Windenergieanlage, umfassend einen Transportbehälter (22), einen Stützarm (23) und einen Nabenadapter (24), wobei in einem Transportzustand des Montagegestells (20) der Stützarm (23) innerhalb des Transportbehälters (22) angeordnet ist und wobei in einem Nutzzustand des Montagegestells (20) der Stützarm (23) mit dem Transportbehälter (22) verbunden ist, so dass der Stützarm (23) und der Transportbehälter (22) jeweils einen Ausleger des Montagegestells (20) bilden.

2. Montagegestell nach Anspruch 1, **dadurch gekennzeichnet, dass** der Nabenadapter (24) im Transportzustand innerhalb des Transportbehälters (22) angeordnet ist und im Nutzzustand auf einem Dach des Transportbehälters (22) befestigt ist.

3. Montagegestell nach Anspruch 1 oder 2, **dadurch gekennzeichnet, dass** der Nabenadapter (24) eine Mehrzahl von Lochkreisen (43) aufweist, wobei jeder Lochkreis (43) zum Anschluss eines anderen Typs einer Rotornabe (17) ausgelegt ist.

4. Montagegestell nach einem der Ansprüche 1 bis 3, **dadurch gekennzeichnet, dass** im Nutzzustand der Abstand (48) zwischen einer zentralen Achse (37) des Nabenadapters (24) und einem distalen Ende (39) des Transportbehälters (22) mindestens 70 %, vorzugsweise mindestens 80 %, weiter vorzugsweise mindestens 90 % der Länge des Transportbehälters entspricht.

5. Montagegestell nach einem der Ansprüche 1 bis 4, **dadurch gekennzeichnet, dass** im Nutzzustand die Länge des Stützarms (23) größer ist als die Länge des Transportbehälters (22) und dass im Transportzustand die Länge des Stützarms (23) kleiner ist als die Länge des Transportbehälters (22).

6. Montagegestell nach einem der Ansprüche 1 bis 5, **dadurch gekennzeichnet, dass** an einem distalen Ende (35) des Stützarms ein höhenverstellbarer Fuß (36) angeordnet ist.

7. Montagegestell nach einem der Ansprüche 1 bis 6, **dadurch gekennzeichnet, dass** die horizontale Achse (38) des Transportbehälters (22) mit der Längsachse (40) des Stützarms (23) einen Winkel zwischen 100° und 140°, vorzugsweise zwischen 110° und 130° einschließt.

8. Montagegestell nach einem der Ansprüche 1 bis 7, **dadurch gekennzeichnet, dass** der Transportbehälter (22) eine Tragestruktur (30) umfasst und dass die Tragestruktur (30) einen ersten Stützarm-Anschluss (49) und eine zweiten Stützarm-Anschluss (50) aufweist.

9. Montagegestell nach Anspruch 8, **dadurch gekennzeichnet, dass** in einer Seitenwand der Tragestruktur (30) ein Durchgang (31) ausgebildet ist.

10. Montagegestell nach einem der Ansprüche 1 bis 9, **dadurch gekennzeichnet, dass** in einer Seitenwand des Nabenadapters (24) ein Durchgang (41) ausgebildet ist.

11. Montagegestell nach einem der Ansprüche 1 bis 10, **gekennzeichnet durch** eine Arbeitsplattform (42), die im Nutzzustand über die Kontur des Transportbehälters (22) hinausragt und die im Transportzustand nicht über die Kontur des Transportbehälters (22) hinausragt.

12. Montagegestell nach einem der Ansprüche 1 bis 11, **gekennzeichnet durch** ein Transport-Hilfsmittel (27), das im Nutzzustand über die Kontur des Transportbehälters (22) hinausragt und das im Transportzustand nicht über die Kontur des Transportbehälters (22) hinausragt.

13. Montagegestell nach einem der Ansprüche 1 bis 12, **dadurch gekennzeichnet, dass** der Transportbehälter (22) mit einem Schubboden (26) ausgestattet ist, auf dem im Transportzustand der Stützarm (23) und/oder der Nabenadapter (24) angeordnet sind.

14. Montagegestell nach einem der Ansprüche 1 bis 13, **dadurch gekennzeichnet, dass** der Transportbehälter (22) in seinen Abmessungen einem 40-Fuß-ISO-Container entspricht.

15. Verfahren zum Montieren eines Rotorsterns (16), bei dem ein Stützarm (23) aus dem Innenraum eines Transportbehälters (22) entnommen wird, bei dem der Stützarm (23) so mit dem Transportbehälter (22) verbunden wird, dass der Stützarm (23) und der Transportbehälter (22) Ausleger eines Montagegestells (20) bilden, bei dem eine Rotornabe (17) an einen Nabenadapter (24) des Montagegestells (20) angeschlossen wird und bei dem ein Rotorblatt (18) mit der Rotornabe (17) verbunden wird.

## Claims

1. Assembly frame for a rotor star (16) of a wind turbine, comprising a transport container (22), a support arm (23) and a hub adaptor (24), wherein, in a state of transport of the assembly frame (20), the support arm (23) is arranged within the transport container (22), and wherein, in a state of use of the assembly frame (20), the support arm (23) is connected to the transport container (22) such that the support arm (23) and the transport container (22) each form a projecting arm of the assembly frame (20).

2. Assembly frame according to Claim 1, **characterized in that** the hub adaptor (24), in the state of transport, is arranged within the transport container (22) and, in the state of use, is fastened on a roof of the transport container (22).

3. Assembly frame according to Claim 1 or 2, **characterized in that** the hub adaptor (24) has a plurality of hole circles (43), wherein each hole circle (43) is configured for connection to a different type of rotor hub (17).

4. Assembly frame according to one of Claims 1 to 3, **characterized in that**, in the state of use, the distance (48) between a central axis (37) of the hub adaptor (24) and a distal end (39) of the transport container (22) corresponds to at least 70%, preferably at least 80%, more preferably at least 90%, of the length of the transport container.

5. Assembly frame according to one of Claims 1 to 4, **characterized in that**, in the state of use, the length of the support arm (23) is greater than the length of the transport container (22), and **in that**, in the state of transport, the length of the support arm (23) is less than the length of the transport container (22).

6. Assembly frame according to one of Claims 1 to 5, **characterized in that** a height-adjustable foot (36) is arranged on a distal end (35) of the support arm.

7. Assembly frame according to one of Claims 1 to 6, **characterized in that** the horizontal axis (38) of the transport container (22) includes an angle of between 100° and 140°, preferably of between 110° and 130°, with the longitudinal axis (40) of the support arm (23).

8. Assembly frame according to one of Claims 1 to 7, **characterized in that** the transport container (22) comprises a bearing structure (30), and **in that** the bearing structure (30) has a first support arm connection (49) and a second support arm connection (50) .

9. Assembly frame according to Claim 8, **characterized in that** a passage (31) is formed in a side wall of the bearing structure (30).

10. Assembly frame according to one of Claims 1 to 9, **characterized in that** a passage (41) is formed in a side wall of the hub adaptor (24).

11. Assembly frame according to one of Claims 1 to 10, **characterized by** a work platform (42) which, in the state of use, projects beyond the contour of the transport container (22) and which, in the state of transport, does not project beyond the contour of the transport container (22).

12. Assembly frame according to one of Claims 1 to 11, **characterized by** a transport aid (27) which, in the state of use, projects beyond the contour of the transport container (22) and which, in the state of transport, does not project beyond the contour of the transport container (22).

13. Assembly frame according to one of Claims 1 to 12, **characterized in that** the transport container (22) is equipped with a sliding floor (26) on which, in the state of transport, the support arm (23) and/or the hub adaptor (24) are arranged.

14. Assembly frame according to one of Claims 1 to 13, **characterized in that**, in terms of its dimensions, the transport container (22) corresponds to a 40-foot ISO container.

15. Method for assembling a rotor star (16), in which a support arm (23) is taken out of the interior of a transport container (22), in which the support arm (23) is connected to the transport container (22) in such a way that the support arm (23) and the transport container (22) form projecting arms of an assembly frame (20), in which a rotor hub (17) is connected to a hub adaptor (24) of the assembly frame (20), and in which a rotor blade (18) is connected to the rotor hub (17).

## Revendications

1. Cadre de montage d'un rotor en étoile (16) d'une éolienne, ledit cadre de montage comprenant un contenant de transport (22), un bras de support (23) et un adaptateur de moyeu (24), le bras de support (23) étant disposé, dans un état de transport du cadre de montage (20), à l'intérieur du contenant de transport (22) et le bras de support (23) étant relié au contenant de transport (22) dans un état d'utilisation du cadre de montage (20) de sorte que le bras de support (23) et le contenant de transport (22) forment chacun une flèche du cadre de montage (20).

2. Cadre de montage selon la revendication 1, **caractérisé en ce que** l'adaptateur de moyeu (24) est disposé à l'intérieur du contenant de transport (22) à l'état de transport et est fixé sur un toit du contenant de transport (22) à l'état d'utilisation.

3. Cadre de montage selon la revendication 1 ou 2, **caractérisé en ce que** l'adaptateur de moyeu (24) comporte une pluralité de cercles de trous (43), chaque cercle de trous (43) étant conçu pour raccorder un type différent de moyeu de rotor (17).

4. Cadre de montage selon l'une des revendications 1 à 3, **caractérisé en ce qu'**à l'état d'utilisation la distance (48) entre un axe central (37) de l'adaptateur de moyeu (24) et une extrémité distale (39) du contenant de transport (22) est d'au moins 70 %, de préférence d'au moins 80 %, plus préférablement d'au moins 90 %, de la longueur du contenant de transport.

5. Cadre de montage selon l'une des revendications 1 à 4, **caractérisé en ce qu'**à l'état d'utilisation la longueur du bras de support (23) est supérieure à la longueur du contenant de transport (22) et **en ce qu'**à l'état de transport la longueur du bras de support (23) est inférieure à la longueur du contenant de transport (22) .

6. Cadre de montage selon l'une des revendications 1 à 5, **caractérisé en ce qu'**un pied (36) réglable en hauteur est disposé à une extrémité distale (35) du bras de support.

7. Cadre de montage selon l'une des revendications 1 à 6, **caractérisé en ce que** l'axe horizontal (38) du contenant de transport (22) forme avec l'axe longitudinal (40) du bras de support (23) un angle compris entre 100° et 140°, de préférence entre 110° et 130°.

8. Cadre de montage selon l'une des revendications 1 à 7, **caractérisé en ce que** le contenant de transport (22) comprend une structure porteuse (30) et **en ce que** la structure porteuse (30) comporte un premier raccord de bras de support (49) et un deuxième raccord de bras de support (50).

9. Cadre de montage selon la revendication 8, **caractérisé en ce qu'**un passage (31) est ménagé dans une paroi latérale de la structure porteuse (30).

10. Cadre de montage selon l'une des revendications 1 à 9, **caractérisé en ce qu'**un passage (41) est ménagé dans une paroi latérale de l'adaptateur de moyeu (24).

11. Cadre de montage selon l'une des revendications 1 à 10, **caractérisé par** une plate-forme de travail (42) qui fait saillie du contour du contenant de transport (22) à l'état d'utilisation et qui ne fait pas saillie du contour du contenant de transport (22) à l'état de transport.

12. Cadre de montage selon l'une des revendications 1 à 11, **caractérisé par** un auxiliaire de transport (27) qui fait saillie du contour du contenant de transport (22) à l'état d'utilisation et qui ne fait pas saillie du contour du contenant de transport (22) à l'état de transport.

13. Cadre de montage selon l'une des revendications 1 à 12, **caractérisé en ce que** le contenant de transport (22) est équipé d'un fond de poussée (26) sur lequel le bras de support (23) et/ou l'adaptateur de moyeu (24) sont disposés à l'état de transport.

14. Cadre de montage selon l'une des revendications 1 à 13, **caractérisé en ce que** le contenant de transport (22) correspond dans ses dimensions à un contenant ISO de 40 pieds.

15. Procédé de montage d'un rotor en étoile (16), procédé dans lequel un bras de support (23) est retiré de l'espace intérieur d'un contenant de transport (22), dans lequel le bras de support (23) est relié au contenant de transport (22) de sorte que le bras de support (23) et le contenant de transport (22) forment les flèches d'un cadre de montage (20), dans lequel un moyeu de rotor (17) est raccordé à un adaptateur de moyeu (24) du cadre de montage (20) et dans lequel une pale de rotor (18) est reliée au moyeu de rotor (17).
